# FASCICULE DE BREVET EUROPEEN

(11) **EP 3 740 363 B1**
(45) Date de publication et mention de la délivrance du brevet: **12.04.2023**
(21) Numéro de dépôt: 19704357.3
(22) Date de dépôt: 18.01.2019
(51) Int. Cl.: B29C 33/38, B29D 30/06, B24C 1/10, B24C 3/32, B22F 3/105, B22F 3/24, B22F 5/00, B22F 7/08, B22F 10/20, B33Y 10/00

(54) **PROCÉDÉ DE FABRICATION D'UN SEGMENT DE MOULE POUR LA CUISSON ET LA VULCANISATION D'UN PNEUMATIQUE**
VERFAHREN ZUR HERSTELLUNG EINES FORMSEGMENTS ZUM HÄRTEN UND VULKANISIEREN EINES REIFENS
METHOD FOR MANUFACTURING A MOULD SEGMENT FOR CURING AND VULCANISING A TYRE

(30) Priorité: 18.01.2018 FR 1850399
(43) Date de publication de la demande: 25.11.2020
(73) Titulaire: COMPAGNIE GENERALE DES ETABLISSEMENTS MICHELIN, 63000 Clermont-Ferrand (FR)
(72) Inventeur: VERLEENE, Stéphanie, 63040 CLERMONT FERRAND CEDEX 9 (FR)
(74) Mandataire: Roussy, Delphine
(86) Numéro de dépôt international: PCT/FR2019/050104
(87) Numéro de publication internationale: WO 2019/141949

(56) Documents cités:
- WO-A1-2016/128087
- WO-A1-2016/200695
- WO-A1-2017/175463
- FR-A1- 2 970 663
- JP-A- 2004 224 213
- KR-A- 20130 068 468
- US-A1- 2016 185 161
- US-A1- 2016 185 162
- A. Vaajoki: "Post-processing of AM specimens, SMACC Vääkky Workshop 15.06.2017", , 15 juin 2017 (2017-06-15), pages 1-39, XP055505384, Extrait de l'Internet: URL:http://smacc.fi/wp-content/uploads/201 7/05/Välkky_Post-processing.pdf [extrait le 2018-09-07] cité dans la demande

## Description

### DOMAINE TECHNIQUE GENERAL

L'invention concerne un procédé de fabrication d'un segment de moule en aluminium pour la cuisson et la vulcanisation d'un pneumatique.

### ETAT DE L'ART

Un moule de cuisson et de vulcanisation d'un pneumatique présente classiquement une forme annulaire et sa paroi intérieure est munie d'éléments saillants, dits "lamelles", qui permettent de former les rainures de la bande de roulement du pneumatique. Un tel moule sera décrit plus en détails ultérieurement.

Ces lamelles sont par exemple réalisées en acier maraging. Une possibilité de les fabriquer est la "fusion sélective par laser".

Pour mémoire, on rappelle que la "fusion sélective par laser" est un procédé de fabrication additive, qui consiste à faire fondre et à souder ensemble de fines couches de poudres métalliques, par balayage à l'aide d'un faisceau laser, afin d'obtenir une pièce.

Un tel procédé présente l'inconvénient de générer un état de surface grossier de la pièce produite. Cet état de surface peut favoriser la formation de points de faiblesse, autrement dit des points d'amorce de fissures, à partir desquels les fissures se propagent plus vite. Ceci entraîne une diminution de la durée de vie en fatigue.

D'autre part, lors de la mise oeuvre de ce procédé pour la fabrication de pièces en acier maraging, (par exemple les lamelles précitées), des mini-trempes se trouvent réalisées, par augmentation de la température lors de la fusion laser, suivie du refroidissement rapide. Ces mini-trempes ne permettent pas de créer un réseau cristallin clairement défini avec des précipités, c'est à dire une structure de matériau homogène et bien organisée, mais aboutissent au contraire à un état hydride hétérogène avec des ségrégations d'éléments chimiques, c'est-à-dire un appauvrissement et une accumulation locale d'éléments chimiques.

Lors de la fabrication d'un moule de cuisson et de vulcanisation de pneumatiques, un procédé utilisable consiste à fabriquer une première matrice comprenant les sillons de la bande de roulement du futur pneumatique, puis à partir de cette première matrice, à fabriquer un moule de forme inverse en matériau souple (par exemple en silastène), puis à partir de ce moule, une seconde matrice en matériau friable correspondant au profil de pneumatique et enfin à partir de cette seconde matrice, le moule définitif.

Ce moule définitif est obtenu en coulant de l'aluminium autour de lamelles en acier maraging obtenues par le procédé précité de fusion sélective par laser, ces lamelles étant conformées pour épouser la forme des rainures de la bande de roulement. La coulée de l'aluminium autour de ces lamelles provoque une nouvelle montée en température de celles-ci et vient amplifier les ségrégations d'éléments chimiques.

La microstructure non homogène et ces ségrégations rendent la lamelle en acier maraging fragile et cassante, avec notamment une chute de l'allongement du matériau, rendant celui-ci peu résistant, après le passage de la zone de déformation élastique. La durée de vie en fatigue s'en trouve également diminuée.

Ceci peut provoquer la casse des lamelles pendant l'utilisation des moules pour la fabrication des pneumatiques.

On connaît déjà d'après le site www.aircraftmaterials.com/data/nickel/C300.html, un procédé de traitement thermique d'un acier maraging, qui consiste à le chauffer jusqu'à une température de 816°C, puis à faire diminuer la température jusqu'à réaliser un revenu à une température de 482°C pour atteindre un pic de durcissement maximum. Toutefois, un tel traitement a pour effet de rendre l'acier plus fragile encore, ce qui est contraire à l'effet recherché.

On connaît d'après le document WO 2016/128087, un procédé de fabrication d'une lamelle de formation de sillons dans une bande de roulement de pneumatiques, ce procédé utilisant la fusion sélective par laser d'une poudre métallique.

Les lamelles sont fabriquées séparément et sont insérées et ancrées dans des fentes formées à l'intérieur des segments d'un moule de vulcanisation de pneus de véhicules. Ce document précise que les segments du moule sont fabriqués par coulée d'un métal à bas point de fusion, par exemple de l'aluminium. Toutefois, il n'est pas précisé comment les lamelles sont ancrées dans le moule.

En outre, ce document ne décrit absolument pas d'étapes de grenaillage desdites lamelles.

Le document WO 2016/200695 décrit des lamelles de formation des sillons de la bande de roulement d'un pneumatique et précise que ces lamelles peuvent être fabriquées à partir d'un procédé d'impression en 3D en utilisant le frettage laser. La base de ces lamelles est enfouie dans le corps du segment de moule de cuisson et de vulcanisation d'un pneumatique.

Ce document ne décrit pas non plus de procédé de grenaillage de ces lamelles.

Le document WO 2017/175463 décrit un procédé de traitement de surface d'un moule en métal visant à améliorer sa durée de vie et son état de surface. Ce procédé comprend une étape de grenaillage à l'aide d'une poudre de carbure, de graphite ou de diamant. Ce grenaillage est effectué en projetant les particules sous pression.

Toutefois, ce document ne concerne absolument pas un moule de cuisson et de vulcanisation d'un pneumatique. De plus, il ne donne aucune indication sur l'impact positif d'un grenaillage sur une lamelle obtenue par un procédé de fusion sélective par laser. Les demandes de brevet US 2016/185161 A1, US 2016/185162 A1 et JP 2004 224213 A décrivent un procédé de traitement de surface d'un moule de cuisson et de vulcanisation d'un pneumatique comprenant une étape de grenaillage.

Enfin, l'article de A.Vaajoki « Post processing of AM specimens, SMACC Vääkky worshop » décrit d'une manière générale un procédé de grenaillage de la surface d'un produit métallique et mentionne l'emploi de billes en céramique, notamment à base d'oxyde de zirconium, d'une dimension comprise entre 0,125 mm et 0,250 mm et sous une pression de 3 à 4 bars.

Aucune indication n'est donnée sur l'effet bénéfique qu'un tel grenaillage pourrait avoir sur une lamelle fabriquée par un procédé de fusion sélective par laser.

### PRESENTATION DE L'INVENTION

L'invention a donc pour but de proposer un procédé de fabrication d'un moule en aluminium pour la cuisson et la vulcanisation d'un pneumatique, qui pallie les inconvénients précités.

A cet effet, l'invention concerne le procédé de fabrication d'un segment de moule en aluminium pour la cuisson et la vulcanisation d'un pneumatique, qui comprend les étapes suivantes consistant à
- a) fixer au moins une lamelle de formation des sillons de la bande de roulement dudit pneumatique, dans une empreinte en matériau friable, dont la forme est le négatif dudit segment de moule à obtenir, de sorte qu'une partie dite "extérieure" de ladite lamelle soit noyée dans le matériau de l'empreinte et qu'une partie dite "intérieure" de la lamelle fasse saillie depuis cette empreinte, cette lamelle étant réalisée en acier maraging et ayant été obtenue par un procédé de fusion sélective par laser,
- b) fermer l'empreinte et couler ou injecter dedans de l'aluminium, en enrobant ladite partie intérieure de la lamelle de façon à la fixer,
- c) casser ladite empreinte afin d'obtenir ledit segment de moule depuis le fond duquel la partie extérieure de ladite lamelle fait saillie.

Conformément à l'invention, ladite lamelle est soumise à un traitement de grenaillage qui consiste à projeter dessus des grains de grenaille, tels que des billes, en un matériau d'une dureté Vickers comprise entre 340 et 500 HV et de dimensions inférieures à 0,3 mm.

Grâce à ces caractéristiques de l'invention, les lamelles du moule obtenu présentent une bien meilleure durée de vie en fatigue.

Selon d'autres caractéristiques avantageuses et non limitatives de l'invention, prises seules ou en combinaison :
- les grains de grenaille sont en acier coulé ou en céramique, telle qu'une céramique comprenant du dioxyde de zirconium, du dioxyde de silicium et de l'alumine ;
- les grains de grenaille ont une dimension d'environ 0,1 mm ;
- le taux de recouvrement du traitement de grenaillage est compris entre 200% et 600% ;
- le grenaillage est réalisé sous une pression comprise entre 1,5.10⁵Pa et 3,5. 10⁵Pa;
- l'étape de grenaillage de la lamelle est réalisé avant l'étape a) ;
- l'étape de grenaillage de la lamelle est réalisé après l'étape c).

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est une vue en perspective d'un exemple de réalisation d'une lamelle en acier maraging de formation des sillons de bandes de roulement pour pneumatiques,
- la figure 2 est un exemple de réalisation d'un moule de cuisson et de vulcanisation de pneumatiques munis d'au moins une des lamelles précitées,
- la figure 3 est une vue en coupe transversale prise selon le plan de coupe passant par la ligne III-III de la figure 1,
- les figures 4a et 4b sont des schémas représentant certaines étapes du procédé de fabrication conforme à l'invention, et
- la figure 5 est un schéma représentant l'une des étapes du procédé de fabrication conforme à l'invention.

### DESCRIPTION DETAILLEE

Le procédé de fabrication du moule va maintenant être décrit plus en détails.

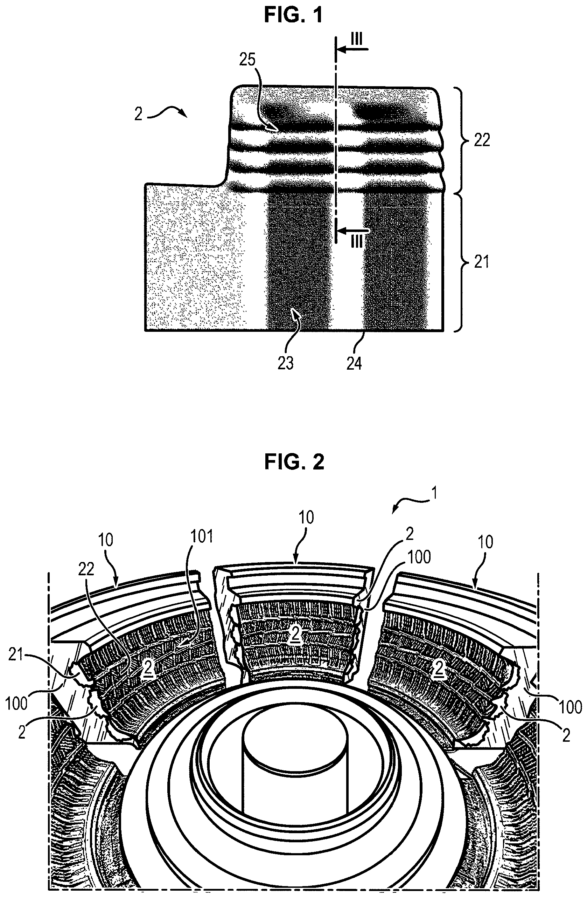

Il consiste à réaliser un moule 1 tel que celui représenté sur la figure 2. Ce moule 1, de forme générale annulaire, se compose de plusieurs segments de moule 10 incurvés, en portion d'anneau et en forme d'arc de cercle, destinés à être rapprochés et assemblés pour former ensemble le moule 1 annulaire. Chaque segment de moule 10 présente sur sa surface intérieure concave 101 plusieurs lamelles 2, conformées de façon à présenter la forme des sillons de la bande de roulement.

Plus précisément, en se reportant à la figure 1, on peut voir un exemple de réalisation d'une telle lamelle 2.

La lamelle 2 présente une forme ondulée. Elle comprend deux parties, à savoir une partie 21, dite « intérieure », car destinée à être noyée dans l'aluminium qui constitue l'arrière 100 d'un segment de moule 10 et une partie 22, dite « extérieure », car destinée à faire saillie depuis l'arrière du segment de moule, en direction du centre du moule 1.

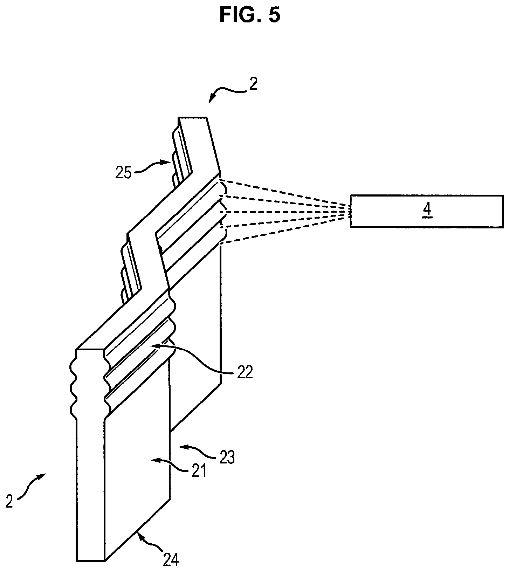

La lamelle 2 présente sur ses deux faces latérales opposées, de grandes ondulations 23 dont la génératrice est perpendiculaire à la base 24 de la partie intérieure 21 (voir également la figure 5).

La partie extérieure 22 présente en outre sur ces deux faces latérales opposées, une pluralité de petites ondulations 25 perpendiculaires aux grandes ondulations 23.

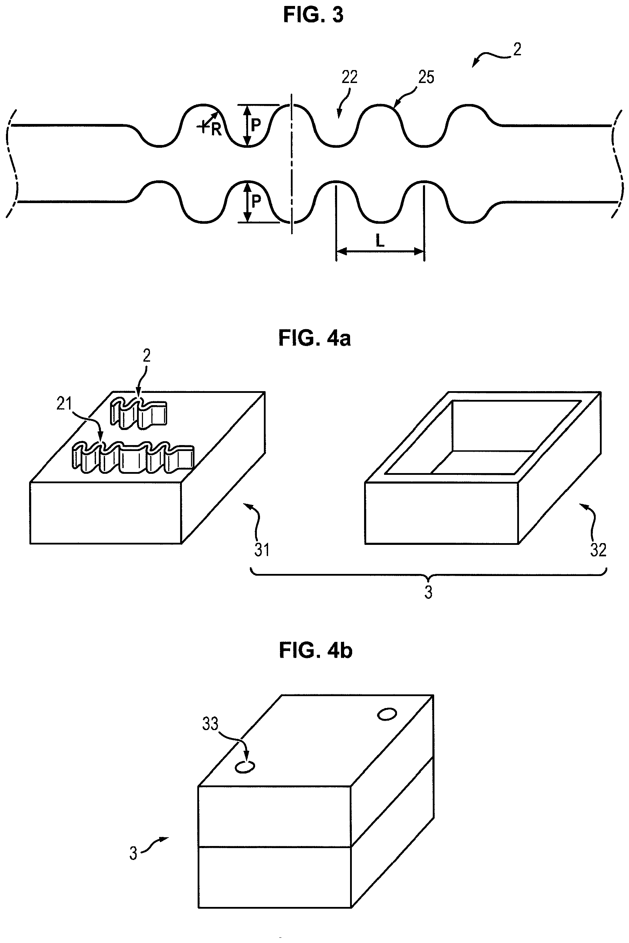

Sur la vue en coupe de la figure 3, on peut voir que les petites ondulations 25 présentent de faibles dimensions. Ainsi à titre d'exemple purement illustratif et pour l'exemple de lamelle 2 représenté sur les figures, la profondeur P des ondulations est de l'ordre de 0,8 mm, la distance L entre deux creux successifs est égale à 1,65 mm et le rayon R du sommet arrondi d'une ondulation est de l'ordre de 0,41 mm.

Ceci montre que les lamelles présentent des zones en creux de petites dimensions, difficiles à atteindre.

Les lamelles 2 peuvent bien évidemment présenter d'autres formes en fonction des contours que l'on souhaite donner aux rainures de la bande de roulement du pneumatique. Toutefois, elles présentent très souvent des zones difficiles d'accès, telles que celles décrites ci-dessus.

Ladite lamelle 2 est en acier maraging, elle a été obtenue par fusion sélective par laser.

L' acier maraging utilisé est ici de préférence un acier comprenant classiquement un pourcentage de carbone inférieur ou égal à 0.03%, une teneur en nickel comprise entre 17% et 19%, une teneur en cobalt comprise entre 8.5% et 9.5%, une teneur en molybdène comprise entre 4.5% et 5.2%, une teneur en titane comprise entre 0% et 0.8%, une teneur en aluminium comprise entre 0% et 0.15%, une teneur en chrome comprise entre 0% et 0.5%, une teneur en cuivre comprise entre 0% et 0.5%, une teneur en silicium comprise entre 0% et 0.1%, une teneur en manganèse comprise entre 0% et 0.1%, une teneur en soufre comprise entre 0% et 0.01%, une teneur en phosphore comprise entre 0% et 0.01%, et le reste de fer, (ces pourcentages étant exprimés en poids par rapport au poids total du produit). Cet acier présente une structure martensitique.

Cet acier présente les propriétés suivantes après traitement thermique de mise en solution puis vieillissement: dureté Vickers élevée (>550HV), bonnes propriétés en traction (Re>1500MPa, Rm>1600MPa) et en fatigue, faible coefficient de dilatation thermique inférieur ou égal à 10,2 × 10-⁶ m/m. °C.

Lorsque cet acier maraging a été obtenu par un procédé de fusion sélective par laser (SLM), c'est-à-dire un procédé de fabrication additive, il présente en outre des propriétés spécifiques brutes de fabrication additive sans post traitement thermique, telles qu'une microstructure très fine (engendré par des gradients thermiques importants liés à ce procédé) qui est bénéfique à certaines propriétés comme la limite d'élasticité (>800MPa), la charge à rupture (>900MPa) et la dureté Vickers (>380HV).

Le procédé de fabrication du segment 10 de moule 1 conforme à l'invention va maintenant être décrit plus en détail en liaison avec la figure 4a.

Conformément à celui-ci, on fixe au moins une lamelle 2 et de préférence plusieurs lamelles dans une empreinte 3 en matériau friable. L'empreinte 3 comprend généralement plusieurs parties, ici deux, référencées respectivement 31 et 32.

Cette empreinte 3 a été obtenue au préalable, par exemple comme décrit précédemment en fabriquant tout d'abord une première matrice ou prototype qui correspond à la forme du pneumatique que l'on souhaite réaliser y compris de ses sillons de la bande de roulement. On moule ensuite sur cette première matrice, une deuxième matrice en un matériau souple, par exemple en silastène.

A partir de cette deuxième matrice, on fabrique l'empreinte 3. Celle-ci est réalisée dans un matériau friable, tel que par exemple du plâtre et les différentes lamelles 2 y sont insérées, de façon que leur partie extérieure 22 soit noyée dans la masse du matériau friable et que leur partie intérieure 21 soit saillante.

Par ailleurs, dans l'exemple représenté sur la figure 4, la deuxième partie 32 de l'empreinte 3 permet de réaliser l'arrière 100 du segment 10 de moule.

Les différentes parties 31, 32 de l'empreinte 3 sont ensuite fermées, comme représenté sur la figure 4b.

L'aluminium est alors coulé ou injecté, par exemple au travers d'un ou plusieurs orifices 33.

Après refroidissement, les différentes parties de l'empreinte 3 en matériau friable sont cassées, ce qui permet d'obtenir un segment de moule 10, tel que représenté sur la figure 2 et qui comprend donc une partie arrière 100 (ou fond) de laquelle font saillie les parties extérieures 22 des différentes lamelles 2. Les parties intérieures 21 des lamelles 2 sont noyées et donc fixées dans l'aluminium.

Conformément à l'invention, les lamelles 2 sont soumises à un traitement de grenaillage connu sous la terminologie anglaise de « shot peening ».

Comme représenté sur la figure 5, ce grenaillage est réalisé à l'aide d'un dispositif 4 de projection sous haute pression de grains de grenaille, tels que des billes, qui sont ainsi projetés à grande vitesse sur la surface extérieure de la lamelle 2 et plus particulièrement sur sa partie extérieure 22. Le dispositif 4 est déplacé de façon à traiter toute la surface.

Il est possible d'utiliser des dispositifs de projection (de grenaillage) différents selon la géométrie de la pièce à traiter, la qualité recherchée... La propulsion des projectiles peut se faire par exemple à l'aide d'un système à air comprimé, d'une machine à turbine ou d'un système mis en mouvement par ultrasons. De multiples buses pré-disposées aux bons angles d'impacts et à la bonne distance permettent d'optimiser la qualité finale obtenue sur la pièce.

Cette projection de grains de grenaille sur la lamelle 2 a pour effet d'améliorer son état de surface. L'impact des graines à haute vitesse y crée des contraintes résiduelles compressives qui permettent d'améliorer significativement la durée de vie en fatigue de ladite lamelle.

Cette opération de grenaillage peut être réalisée soit sur la lamelle 2 après sa fabrication et avant qu'elle ne soit insérée dans l'empreinte 3, ce traitement étant réalisé préférentiellement sur la partie extérieure 22.

Le grenaillage peut également être effectué une fois le segment de moule 10 terminé et alors que la lamelle 2 est insérée dans ce segment.

Des essais ont été réalisés afin de déterminer les meilleures conditions de projection pour obtenir l'effet recherché.

Les résultats ont montré qu'il était préférable d'utiliser des grains de dimensions inférieures ou égales à 0,3 mm, de préférence encore de dimensions égales à 0,1mm ou voisines de 0,1 mm. S'il s'agit de billes, cette dimension sera le diamètre. De préférence également, ces billes présentent une dureté Vickers comprise entre 340 et 500 HV.

De façon avantageuse, ces grains de grenaille sont réalisés en acier coulé, avec ou sans chrome ou encore en céramique, par exemple une céramique à base de dioxyde de zirconium (ZrO₂,) de dioxyde de silicium (SiO₂) et d'alumine (Al₂O₃).

De préférence, le taux de recouvrement, c'est-à-dire le nombre de passes du dispositif 4 est compris entre 200% et 600%, en d'autres termes la projection des grains est réalisée entre deux et six fois sur la même surface.

La pression utilisée est avantageusement comprise entre 1,5 bars (1,5.10⁵Pa) et 3,5 bars (3,5.10⁵Pa).

Enfin, le dispositif 4 peut être dépassé le long de son axe (en avant et en arrière) de façon à conserver la même distance entre l'extrémité de la buse de projection et la lamelle à traiter.

Les observations au microscope électronique montrent également une nette amélioration de l'état de la surface de la lamelle.

Des tests complémentaires ont montré un gain sur la durée de vie en fatigue compris entre 75% et 450% pour des pièces ayant subi le procédé conforme à l'invention (grenaillage puis coulée d'aluminium) par rapport à des pièces n'ayant pas subi le traitement de grenaillage.

## Revendications

1. Procédé de fabrication d'un segment (10) de moule (1) en aluminium pour la cuisson et la vulcanisation d'un pneumatique, qui comprend les étapes suivantes consistant à :
- a) fixer au moins une lamelle (2) de formation des sillons de la bande de roulement dudit pneumatique, dans une empreinte (3, 31, 32) en matériau friable, dont la forme est le négatif dudit segment (10) de moule à obtenir, de sorte qu'une partie (22) dite "extérieure" de ladite lamelle soit noyée dans le matériau de l'empreinte (3, 31, 32) et qu'une partie (21) dite "intérieure" de la lamelle fasse saillie depuis cette empreinte, cette lamelle (2) étant réalisée en acier maraging et ayant été obtenue par un procédé de fusion sélective par laser,
- b) fermer l'empreinte (3, 31, 32) et couler ou injecter dedans de l'aluminium, en enrobant ladite partie intérieure (21) de la lamelle (2) de façon à la fixer,
- c) casser ladite empreinte (3, 31, 32) afin d'obtenir ledit segment (10) de moule depuis le fond (100) duquel la partie extérieure (22) de ladite lamelle fait saillie,
**caractérisé en ce que** ladite lamelle (2) est soumise à un traitement de grenaillage qui consiste à projeter dessus des grains de grenaille, tels que des billes, en un matériau d'une dureté Vickers comprise entre 340 et 500 HV et de dimensions inférieures à 0,3 mm.

2. Procédé de fabrication selon la revendication 1, **caractérisé en ce que** les grains de grenaille sont en acier coulé ou en céramique, telle qu'une céramique comprenant du dioxyde de zirconium, du dioxyde de silicium et de l'alumine.

3. Procédé de fabrication selon la revendication 1 ou 2, **caractérisé en ce que** les grains de grenaille ont une dimension d'environ 0,1 mm.

4. Procédé de fabrication selon l'une des revendications précédentes, **caractérisé en ce que** le taux de recouvrement du traitement de grenaillage est compris entre 200% et 600%.

5. Procédé de fabrication selon l'une des revendications précédentes, **caractérisé en ce que** le grenaillage est réalisé sous une pression comprise entre 1,5.10⁵Pa et 3,5. 10⁵Pa.

6. Procédé de fabrication de fabrication selon l'une des revendications précédentes, **caractérisé en ce que** l'étape de grenaillage de la lamelle (2) est réalisé avant l'étape a).

7. Procédé de fabrication de fabrication selon l'une des revendications1 à 5, **caractérisé en ce que** l'étape de grenaillage de la lamelle (2) est réalisé après l'étape c).

## Patentansprüche

1. Verfahren zur Herstellung eines Segments (10) einer Form (1) aus Aluminium zum Härten und Vulkanisieren eines Reifens, welches die folgenden Schritte umfasst
- a) Befestigen mindestens einer Lamelle (2) zur Bildung der Rillen des Laufstreifens des Reifens in einer Hohlform (3, 31, 32) aus bröckligem Material, deren Form das Negativ des herzustellenden Formsegments (10) ist, derart, dass ein sogenannter "äußerer" Teil (22) der Lamelle in das Material der Hohlform (3, 31, 32) eingebettet ist und ein sogenannter "innerer" Teil (21) der Lamelle aus dieser Hohlform herausragt, wobei diese Lamelle (2) aus Maraging-Stahl hergestellt ist und durch ein selektives Laserschmelzverfahren erhalten wird,
- b) Schließen der Hohlform (3, 31, 32) und Eingießen oder Einspritzen von Aluminium, wobei der untere Teil (21) der Lamelle (2) so umhüllt wird, dass er befestigt wird,
- c) Zerbrechen der Hohlform (3, 31, 32), um das Formsegment (10) zu erhalten, von dessen Boden (100) aus der äußere Teil (22) der Lamelle vorsteht,
**dadurch gekennzeichnet, dass** die Lamelle (2) einer Strahlbearbeitung unterzogen wird, die darin besteht, Strahlkörner wie etwa Kugeln aus einem Material mit einer Vickers-Härte zwischen 340 und 500 HV und Abmessungen von weniger als 0,3 mm auf sie zu schleudern.

2. Herstellungsverfahren nach Anspruch 1, **dadurch gekennzeichnet, dass** die Strahlkörner aus Gussstahl oder aus Keramik, wie etwa einer Keramik, die Zirconiumdioxid, Siliciumdioxid und Aluminiumoxid umfasst, bestehen.

3. Herstellungsverfahren nach Anspruch 1 oder 2, **dadurch gekennzeichnet, dass** die Strahlkörner eine Abmessung von ungefähr 0,1 mm aufweisen.

4. Herstellungsverfahren nach einem der vorhergehenden Ansprüche, **dadurch gekennzeichnet, dass** der Deckungsgrad der Strahlbearbeitung zwischen 200 % und 600 % liegt.

5. Herstellungsverfahren nach einem der vorhergehenden Ansprüche, **dadurch gekennzeichnet, dass** die Strahlbehandlung unter einem Druck zwischen 1,5.10⁵ Pa und 3,5.10⁵ Pa durchgeführt wird.

6. Herstellungsverfahren nach einem der vorhergehenden Ansprüche, **dadurch gekennzeichnet, dass** der Schritt der Strahlbearbeitung der Lamelle (2) vor dem Schritt a) durchgeführt wird.

7. Herstellungsverfahren nach einem der Ansprüche 1 bis 5, **dadurch gekennzeichnet, dass** der Schritt der Strahlbearbeitung der Lamelle (2) nach dem Schritt c) durchgeführt wird.

## Claims

1. Method for manufacturing an aluminium mould (1) segment (10) for curing and vulcanizing a tyre, which comprises the following steps involving:
- a) fixing at least one thin blade (2) for the formation of the grooves in the tread of the said tyre, in a mould form (3, 31, 32) made of friable material, the shape of which is the negative of the said mould segment (10) that is to be obtained, so that a so-called "exterior" part (22) of the said thin blade is embedded in the material of the mould form (3, 31, 32) and so that a so-called "interior" part (21) of the thin blade projects from this mould form, this thin blade (2) being made from maraging steel and having been obtained by a selective laser melting method,
- b) closing the mould form (3, 31, 32) and pouring or injecting aluminium into it, coating the said interior part (21) of the thin blade (2) so as to fix it in place,
- c) breaking the said mould form (3, 31, 32) in order to obtain the said mould segment (10), from the bottom (100) of which the exterior part (22) of the said thin blade projects,
**characterized in that** the said thin blade (2) is subjected to a peening treatment which involves blasting it with shot particles, such as beads, made from a material with a Vickers hardness comprised between 340 and 500 HV and with dimensions smaller than 0.3 mm.

2. Method of manufacture according to Claim 1, **characterized in that** the shot particles are made of cast steel or of ceramic, such as a ceramic containing zirconium dioxide, silicon dioxide and alumina.

3. Method of manufacture according to Claim 1 or 2, **characterized in that** the shot particles have a dimension of around 0.1 mm.

4. Method of manufacture according to one of the preceding claims, **characterized in that** the coverage of the peening treatment is comprised between 200% and 600%.

5. Method of manufacture according to one of the preceding claims, **characterized in that** the peening is performed at a pressure of between 1.5 × 10⁵Pa and 3.5 × 10⁵Pa.

6. Method of manufacture according to one of the preceding claims, **characterized in that** the step of peening the thin blade (2) is performed before step a).

7. Method of manufacture of manufacture according to one of Claims 1 to 5, **characterized in that** the step of peening the thin blade (2) is performed after step c).
